# EUROPEAN PATENT SPECIFICATION

(11) **EP 3 966 842 B1**
(45) Date of publication and mention of the grant of the patent: **14.08.2024**
(21) Application number: 19928134.6
(22) Date of filing: 06.05.2019
(51) Int. Cl.: H01H 31/00, H02B 13/075

(54) **EARTHING SWITCH FOR SWITCHGEAR AND SWITCHGEAR**
ERDUNGSSCHALTER FÜR SCHALTANLAGE UND SCHALTANLAGE
INTERRUPTEUR DE MISE À LA TERRE POUR APPAREILLAGE DE COMMUTATION ET APPAREILLAGE DE COMMUTATION

(43) Date of publication of application: 16.03.2022
(73) Proprietor: ABB SCHWEIZ AG, 5400 Baden (CH)
(72) Inventor: QIU, Xuedong, Xiamen, Fujian 361101 (CN); XIE, Jiewei, Xiamen, Fujian 361006 (CN)
(74) Representative: Zimmermann & Partner Patentanwälte mbB
(86) International application number: PCT/CN2019/085733
(87) International publication number: WO 2020/223884

(56) References cited:
- EP-A1- 3 367 408
- CN-U- 201 673 844
- CN-U- 206 432 192
- CN-U- 206 774 437
- CN-U- 208 315 448
- CN-U- 208 522 348
- KR-A- 20090 011 780
- US-A- 2 227 925
- US-A- 3 182 145

## Description

### FIELD

Embodiments of the present disclosure relate to a earthing switch for a switchgear as well as the associated switchgear.

### BACKGROUND

An earthing switch is a kind of mechanical earthing device that releases the static or residual charge of the equipment and circuit under maintenance or other situations. Usually, even after isolator operation there may be some residual charges on the busbar which may harm the personnel going for maintenance. Thus before commencing maintenance we have to ground the isolated busbar to avoid any dangerous events. That is, the earthing switch is necessary to earth the conductor parts before maintenance and also to provide deliberate short-current while testing.

The earthing switch can withstand a certain amount of current under abnormal conditions (such as short circuit). The earthing switch typically comprises a fixed contact and a movable contact arranged in each of the phases of the switchgear. In order to maintain an earthing performance of the earthing switch, good contact conditions between the fixed and movable contacts should be ensured. Furthermore, the main parts, such as the fixed contacts and movable contacts of the earthing switch are usually made of a copper material capable of carrying a large current. EP 3 367 408 A1 discloses a vacuum switch assembly with a medium-voltage disconnector for three phases. The assembly has opposing fixed contacts that can be individually associated with pairs of blades. The blades are alternatingly and selectively rotated to be engaged with one or the other of the two fixed contacts connected to at least one user or to the ground, between closed and open positions. US 2,227,925 discloses two conductors which are mounted to have relative movement, one with respect to the other, and are connected in current carrying relation by means affording substantially point contact between the conductors and which is disposed in or defines the pivot axis about which one conductor has movement relative to the other.

### SUMMARY

Although a large amount of copper material has been used, which causes high cost of the earthing switch, the performance of the earthing switch is still unsatisfactory due to shape, coupling or assembling methods of the fixed and movable contacts. In order to at least partially address the above and other potential problems, embodiments of the present disclosure provide a earthing switch for a switchgear.

In a first aspect, a earthing switch for a switchgear is provided. The earthing switch comprises a plurality of fixed contacts arranged in a plurality of phases of the switchgear; and a plurality of movable contacts operable to rotate by an operating mechanism of the switchgear so that the movable contacts can be coupled to or decoupled from the respective fixed contacts, wherein each of the movable contacts comprises a tubular blade mounted on the operating mechanism, a first end of the tubular blade being flattened.

By using the tubular blade as a movable blade, the earthing switch can withstand a large current with less copper material being used due to a better current carrying capacity of the tubular blade. Furthermore, the first end of tubular blade where the tubular blade is mounted on the operating mechanism is flattened, which gives the tubular blade a higher flexural strength and tensile strength. Moreover, the tubular blade can be manufactured in a cost efficient way.

In some embodiments, each of the movable contacts further comprises a pair of contact fingers fixed on a second side of the tubular blade opposite to the first end, and wherein the pair of contact fingers are adapted to be coupled to the respective fixed contact by clamping the fixed contact. By arranging the contact fingers on the tubular blade, i.e., the earthing side, higher earthing performance can be obtained.

In some embodiments, the pair of contact fingers are fixed to the tubular blade by pressure riveting, and wherein the tubular blade comprises a pressure bar inserted in the tubular blade by interference fit to prevent the second end from being deformed when the pair of contact fingers are riveted on the tubular blade. In this way, the pair of contact fingers being fixed to the tubular blade by pressure riveting can ensure better connection performance between the contact fingers and tubular blade in a cost efficient way.

In some embodiments, the earthing switch further comprises at least one limiting bar arranged perpendicular to the tubular blade to connect and limit the pair of contact fingers.

In some embodiments, the earthing switch further comprises a plurality of elastic members arranged at ends of the limiting bar to press the pair of contact fingers towards each other. With this arrangement, more stable contact force between the contact fingers and the fixed contact can be ensured.

In some embodiments, each of the plurality of elastic members comprises a disc spring arranged around the limiting bar. In this way, the assembly of the elastic members may be easier.

In some embodiments, the earthing switch further comprises a cushion arranged between the pair of contact fingers. The cushion can reduce the bounce when the movable contact is coupled to the fixed contact, thus further improving the earthing performance.

In some embodiments, each of the pair of contact fingers is bent away from each other at an end away from the tubular blade. In this way, the fixed contact may slide between the pair of contact fingers more easily, thus improving the contact performance.

In some embodiments, the earthing switch further comprises a tubular conductor arranged between two of the plurality of movable contacts adjacent to each other with each end of the tubular conductor in contact with a flatten surface on the first end of the respective tubular blade. This arrangement further reduces the cost of the earthing switch while improving the earthing performance.

In a second aspect, a switchgear comprising an earthing switch as mentioned above is provided.

It is to be understood that the Summary is not intended to identify key or essential features of embodiments of the present disclosure, nor is it intended to be used to limit the scope of the present disclosure. Other features of the present disclosure will become easily comprehensible through the description below.

### BRIEF DESCRIPTION OF THE DRAWINGS

The above and other objectives, features and advantages of the present disclosure will become more apparent through more detailed depiction of example embodiments of the present disclosure in conjunction with the accompanying drawings, wherein in the example embodiments of the present disclosure, same reference numerals usually represent same components.
FIG. 1 shows a perspective view of an earthing switch for a switchgear according to embodiments of the present disclosure;
FIG. 2 shows a perspective view of a movable contact of a earthing switch for a switchgear according to embodiments of the present disclosure;
FIG. 3 shows a perspective view of an earthing switch for a switchgear according to embodiments of the present disclosure;
FIG. 4 shows a side view of an earthing switch for a switchgear according to embodiments of the present disclosure;
FIGs. 5 and 6 show perspective views of an earthing switch for a switchgear according to other embodiments of the present disclosure; and
FIG. 7 shows a side view of an earthing switch for a switchgear according to other embodiments of the present disclosure.

Throughout the drawings, the same or similar reference symbols are used to indicate the same or similar elements.

### DETAILED DESCRIPTION

The present disclosure will now be discussed with reference to several example embodiments. It is to be understood these embodiments are discussed only for the purpose of enabling those skilled persons in the art to better understand and thus implement the present disclosure, rather than suggesting any limitations on the scope of the subject matter.

As used herein, the term "comprises" and its variants are to be read as open terms that mean "comprises, but is not limited to." The term "based on" is to be read as "based at least in part on." The term "one embodiment" and "an embodiment" are to be read as "at least one embodiment." The term "another embodiment" is to be read as "at least one other embodiment." The terms "first," "second," and the like may refer to different or same objects. Other definitions, explicit and implicit, may be comprised below. A definition of a term is consistent throughout the description unless the context clearly indicates otherwise.

As well known, an earthing switch is a kind of mechanical earthing device that releases the static or residual charge of the equipment and circuit under maintenance or other situations. Usually, even after isolator operation there may be some residual charges on the busbar which may harm the personnel going for maintenance.

The earthing switch can withstand a certain amount of current under abnormal conditions (such as short circuit). Accordingly, the main parts, such as the fixed contact and movable contact of the earthing switch are usually made of a copper material capable of carrying a large current.

However, due to shape, coupling or assembling methods of the fixed and movable contacts, although a large amount of copper material has been used, which causes high cost of the earthing switch, the performance of the earthing switch is still unsatisfactory. For example, in the conventional solutions, the most parts of the fixed contacts and the movable contacts and even the conductors between the movable contacts are made from copper plates to ensure the fixed and movable contacts can withstand a large current.

On one hand, the earthing switch adopting such an arrangement requires more components made of copper material, thus causing a complicated structure and high cost. On the other hand, the conventional arrangement tends to form more sharp corners which are prone to skin effect, reducing the performance of the earthing switch.

In order to at least partially address the above and other potential problems, embodiments of the present disclosure provide an earthing switch 100 for a switchgear.

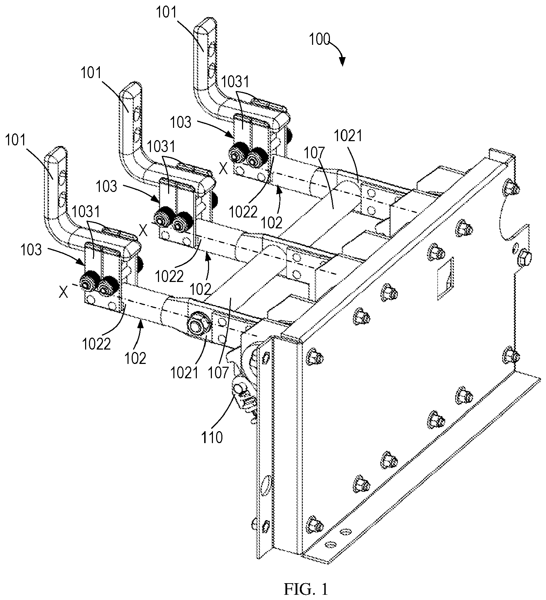

FIG. 1 shows a perspective view of an earthing switch 100 for a switchgear according to embodiments of the present disclosure. As shown, the earthing switch 100 generally comprises a plurality of fixed contacts 101 and movable contacts 103. Each of the plurality of fixed contacts 101 and the respective movable contacts 103 are arranged in a phase of the switchgear. Usually, there are three phases of circuits arranged in the switchgear, each of which needs at least one pair of fixed contacts 101 and movable contacts 103.

The movable contact 103 can be driven to rotate by an operating mechanism 110 of the switchgear, as shown in FIGs. 1-3. In this way, each of the movable contact 103 can be coupled to or decoupled from the respective fixed contact 101. As mentioned above, the conventional movable contacts and fixed contacts, such as movable blades and fingers are typically made from copper plates, which consume a large amount of copper material while still suffering from low performance to withstand high short time current.

Different from the conventional designs, the movable contacts 103 of the earthing switch 100 employs a copper tube as the movable blade. The inventors have discovered that better current carrying capacity can be obtained with less copper usage when the copper tube is used as the movable blade. Thus, with the movable contacts 103 using the tubular blade 102, the amount of the copper material used as the movable contacts 103 can be significantly reduced while improving the earthing performance of the earthing switch 100.

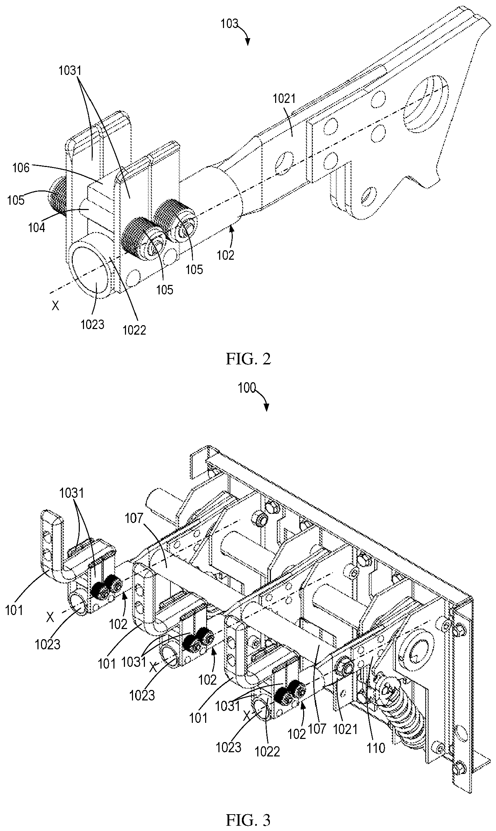

Furthermore, in order to facilitate installation of the tubular blade 102 onto the operating mechanism 110, one end (for ease of discussion, referred to as a first end 1021) of the tubular blade 102 is flattened, as shown in FIGs. 2-4. With the first end of tubular blade being flattened, higher flexural strength and tensile strength of the tubular blade 102 can be obtained. Moreover, the tubular blade 102 can efficiently reduce the skin effect due to the absence of sharp corners. In addition, in some embodiments, the fixed contact 101 is rounded to reduce the skin effect.

The first end 1021 of the tubular blade 102 may be flattened in any suitable ways. For example, in some embodiments, the tubular blade 102 is flattened by mould pressing. That is, after a copper tube is provided, one end of the copper tube is mould pressed to form flattened surfaces.

In some embodiments, as shown in FIG. 2, a pair of contact fingers 1031 may be fixed to the other end (referred to as a second end 1022 for ease of discussion) of the tubular blade 102. For example, in some embodiments, the pair of contact fingers 1031 is coupled to the fixed contacts 101 by clamping the fixed contacts 101. By arranging the contact fingers 1031 on the tubular blade 102, i.e., the earthing side, higher earthing performance can be obtained.

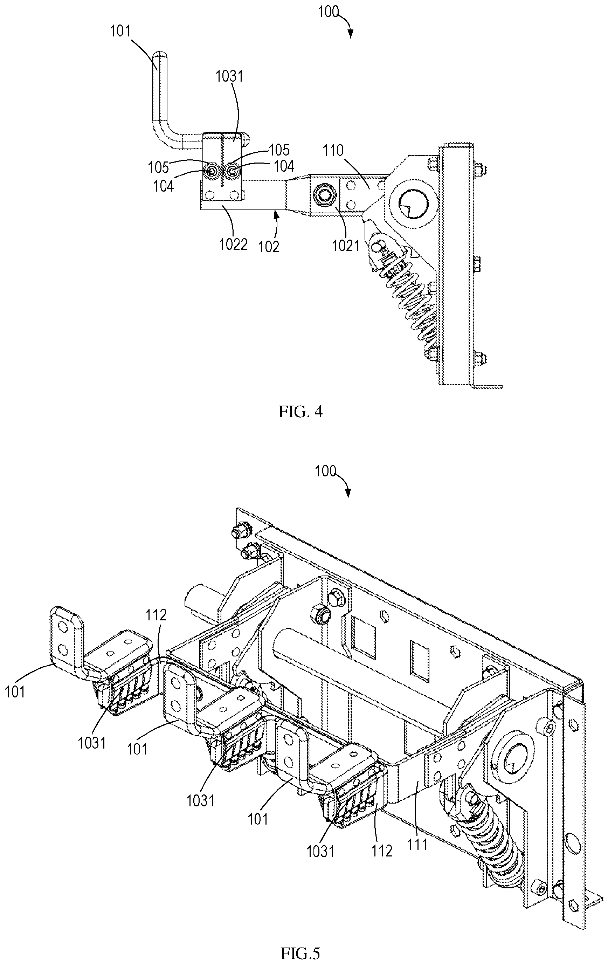

It is to be understood that the embodiments where the contact fingers 1031 are arranged on the tubular blade 102 are described only for illustration, without suggesting any limitations as to the scope of the present disclosure. Any other suitable structures and arrangements are possible as well. For example, in some alternative embodiments, the contact fingers 1031 may also be arranged on the fixed contacts 101, as shown in FIGs. 5-7, which will be discussed further below.

In some embodiments, the contact fingers 1031 may be fixed to the second end 1022 of the tubular blade 102 by pressure riveting. In order to prevent the second end 102 from being deformed when the pair of contact fingers 1031 are riveted on the tubular blade 102, a pressure bar 1023 is inserted in the tubular blade 102 from the second end 1022 by interference fit, as shown in FIG. 2. For example, in some embodiments, the pressure bar 1023 is inserted in the tubular blade 102 from the second end 1022 after the first end 1021 of the tubular blade 102 is flattened.

Then the contact fingers 1031 may be fixed to the second end 1022 of the tubular blade 102 by pressure riveting for example with 100T hydraulic press machine. In this way, better connection performance can be achieved between the contact fingers 1031 and tubular blade 102 in a cost efficient way.

It is to be understood that the embodiments where the first end is flattened first and then the second end is riveted are merely for illustration, without suggesting any limitations as to the scope of the present disclosure. For example, in some alternative embodiments, the pressure rod 1023 may be inserted in the second end 1022 and then the first end is flattened.

In some embodiments, the portion of the tubular blade 102 may be milled into a flat surface. In this way, contact areas between the contact fingers 1031 and the tubular blade 102 can be increased, further improving the contact performance between the contact fingers 1031 and tubular blade 102.

In order to maintain the contact force between the contact fingers 1031 and the fixed contact 101, in some embodiments, at least one limiting bar 104 may be arranged perpendicular to the tubular blade 102 and the contact fingers 1031 to connect and limit the pair of contact fingers 1031.

In some embodiments, the limiting bar 104 may be a bolt with a nut. In this way, the distance between the pair of contact fingers 1031 may be fine-tuned, so that contact force between the contact fingers 1031 can be adjusted appropriately.

It is to be understood that the embodiments where the limiting bar 104 may be a bolt with a nut are merely for illustration, without suggesting any limitations as to the scope of the present disclosure. For example, in some alternative embodiments, the limiting bar 104 may also be any other suitable element, such as a rivet.

In some embodiments, as shown in FIG. 2, a plurality of elastic members 105 may be arranged at ends of the limiting bar 104 to press the pair of the contact fingers 1031 towards each other. In this way, more stable contact performance between the fixed and movable contacts can be obtained.

The elastic members 105 in some embodiments may be disc springs arranged around the limiting bar 104, as shown in FIG. 2, which can facilitate the assembling of the limiting bar 104 with the disc springs. Furthermore, the disc spring as a standard component can further reduce the cost of the earthing switch 100.

It is to be understood that the embodiments where the elastic members 105 comprise disc springs are merely for illustration, without suggesting any limitations as to the scope of the present disclosure. Any other suitable structures and arrangements are possible as well. For example, in some alternative embodiments, the elastic members 105 may also comprise spring pieces or the like.

In some embodiments, as shown in FIG. 2, there may be a cushion 106 arranged between the pair of contact fingers 1031. The cushion 106 can efficiently reduce the bounce when the movable contact 103 is rotated to be coupled to the fixed contact 101. In this way, a more stable earthing performance of the earthing switch 100 can be obtained.

Furthermore, in order to facilitate entering of the fixed contact 101 into the pair of contact fingers 1031, in some embodiments, as shown in FIG.2, each of the pair of contact fingers 1031 may be bent away from each other at an end away from the tubular blade 102. The bent end can be rounded or chamfered with a bending angle between 0° and 45° _{∘}

In some embodiments, the connections between phases may also be employ tubular conductors 107, each of which is arranged between two of the plurality of movable contacts 103 adjacent to each other. Each end of the tubular conductor 107 is in contact with the flattened surface on the first end 1021 of the tubular blade 102 to ensure a better connection performance between phases. The tubular conductor 107 can be made of any suitable conductor, such as steel or aluminum, which may further reduce the cost of the earthing switch 100.

The above description illustrates some embodiments of the earthing switch 100 with reference to FIGs. 1-4. FIGs. 5-7 show an earthing switch 100 for a switchgear according to other embodiments of the present disclosure. As shown, the earthing switch 100 comprises a fixed contact 101 with contact fingers 1031 attached thereon. Compared to the above mentioned embodiments as shown in FIGs. 1-4, the movable contacts comprise a frame 111 fixed to the operating mechanism and movable blades 112 arranged on the frame 111.

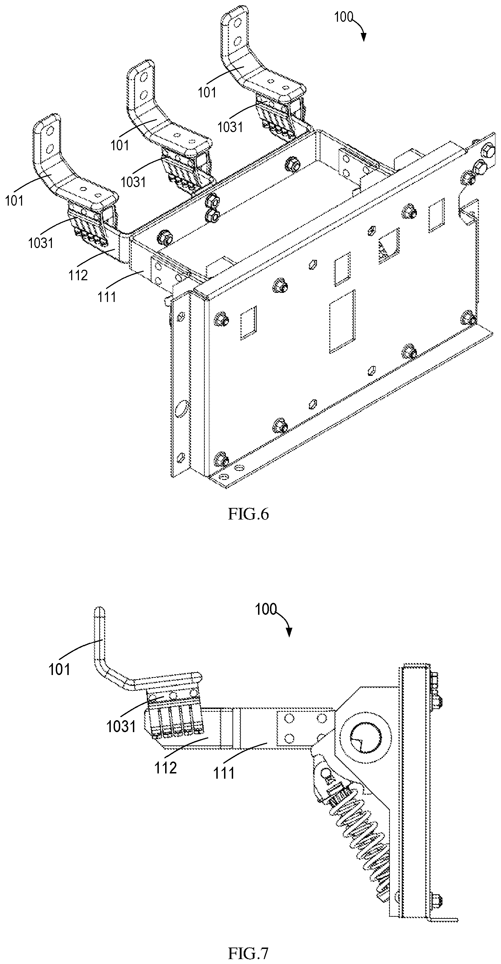

As shown in FIGs. 5 and 6, two of the movable blades 112 are in the form of two branches of U-shape blade frame while reminder one of the movable blades 112 is of an L-shaped structure arranged between two branches of the U-shaped blade frame. With this arrangement, only the movable blades 112 may be made of copper material and other parts, such as the frame 111 may be made of other economical conducting material, such as steel or aluminum.

In this way, the structure of the movable contact is simplified from 3-parts components to 2-parts component. Furthermore, the amount of copper material can be greatly reduced while improving the earthing performance and increasing the supporting strength of the movable contact. In addition, the structure of the contact fingers 1031 is simplified.

For example, as shown in FIG. 6, the contact fingers 1031 may comprise U-shaped copper pin, steel spring arranged outside of the U-shaped copper pin to press the branches of U-shaped copper pin towards each other, and a steel pad arranged between the branches of U-shaped copper pin. That is, only four parts is needed. On the contrary, at least seven parts are needed to form the conventional contact fingers that perform the same function. In this way, the amount of copper material is further reduced.

From the above discussions, it can be known that, with the above arrangements of earthing switch 100, the earthing switch 100 can withstand a large current with less copper material being used due to an improved current carrying capacity. Furthermore, in some embodiments, the first end of the tubular blade where the tubular blade is mounted on the operating mechanism is flattened, which gives the tubular blade a higher flexural strength and tensile strength. Moreover, the tubular blade can be made in a cost efficient way.

## Claims

1. An earthing switch (100) for a switchgear, comprising:
a plurality of fixed contacts (101) arranged in a plurality of phases of the switchgear; and
a plurality of movable contacts (103) operable to rotate by an operating mechanism (110) of the switchgear so that the movable contacts (103) can be coupled to or decoupled from the respective fixed contacts (101),
**characterised in that** each of the movable contacts (103) comprises a tubular blade (102) mounted on the operating mechanism (110), a first end (1021) of the tubular blade (102) being flattened.

2. The earthing switch (100) of claim 1, wherein each of the movable contacts (103) further comprises a pair of contact fingers (1031) fixed on a second side (1022) of the tubular blade (102) opposite to the first end (1021), and wherein the pair of contact fingers (1031) are adapted to be coupled to the respective fixed contact (101) by clamping the fixed contact (101).

3. The earthing switch (100) of claim 2, wherein the pair of contact fingers (1031) are fixed to the tubular blade (102) by pressure riveting, and
wherein the tubular blade (102) comprises a pressure bar (1023) inserted in the tubular blade (102) by interference fit to prevent the second end (1022) from being deformed when the pair of contact fingers (1031) are riveted on the tubular blade (102).

4. The earthing switch (100) of claim 2, further comprising:
at least one limiting bar (104) arranged perpendicular to the tubular blade (102) to connect and limit the pair of contact fingers (1031).

5. The earthing switch (100) of claim 4, further comprising:
a plurality of elastic members (105) arranged at ends of the limiting bar (104) to press the pair of contact fingers (1031) towards each other.

6. The earthing switch (100) of claim 5, wherein each of the plurality of elastic members (105) comprises a disc spring arranged around the limiting bar (104).

7. The earthing switch (100) of claim 2, further comprising:
a cushion (106) arranged between the pair of contact fingers (1031).

8. The earthing switch (100) of claim 2, wherein each of the pair of contact fingers (1031) is bent away from each other at an end away from the tubular blade (102).

9. The earthing switch (100) of claim 1, further comprising:
a tubular conductor (107) arranged between two of the plurality of movable contacts (103) adjacent to each other with each end of the tubular conductor (107) in contact with a flatten surface on the first end (1021) of the respective tubular blade (102).

10. A switchgear comprising the earthing switch of any of claims 1-9.

## Patentansprüche

1. Erdungsschalter (100) für eine Schaltanlage, umfassend:
eine Vielzahl von festen Kontakten (101), die in einer Vielzahl von Phasen der Schaltanlage angeordnet sind; und
eine Vielzahl von beweglichen Kontakten (103), die durch einen Betätigungsmechanismus (110) der Schaltanlage drehbar sind, so dass die beweglichen Kontakte (103) mit den jeweiligen festen Kontakten (101) gekoppelt oder von ihnen entkoppelt werden können,
**dadurch gekennzeichnet, dass** jeder der beweglichen Kontakte (103) eine rohrförmige Klinge (102) umfasst, die an dem Betätigungsmechanismus (110) angebracht ist, wobei ein erstes Ende (1021) der rohrförmigen Klinge (102) abgeflacht ist.

2. Erdungsschalter (100) nach Anspruch 1, wobei jeder der beweglichen Kontakte (103) ferner ein Paar Kontaktfinger (1031) umfasst, die an einer zweiten Seite (1022) der röhrenförmigen Klinge (102) gegenüber dem ersten Ende (1021) befestigt sind, und wobei das Paar Kontaktfinger (1031) beschaffen ist, dass es durch Festklemmen des festen Kontakts (101) mit dem jeweiligen festen Kontakt (101) verbunden werden kann.

3. Erdungsschalter (100) nach Anspruch 2, wobei das Paar von Kontaktfingern (1031) an der rohrförmigen Klinge (102) durch Druckvernietung befestigt ist, und
wobei die rohrförmige Klinge (102) einen Druckstab (1023) umfasst, der durch Presspassung in die rohrförmige Klinge (102) eingesetzt ist, um zu verhindern, dass das zweite Ende (1022) verformt wird, wenn das Paar Kontaktfinger (1031) auf die rohrförmige Klinge (102) genietet wird.

4. Erdungsschalter (100) nach Anspruch 2, ferner umfassend:
mindestens einen Begrenzungsstab (104), der senkrecht zu der rohrförmigen Klinge (102) angeordnet ist, um das Paar Kontaktfinger (1031) zu verbinden und zu begrenzen.

5. Erdungsschalter (100) nach Anspruch 4, ferner umfassend:
eine Vielzahl von elastischen Elementen (105), die an den Enden der Begrenzungsstange (104) angeordnet sind, um das Paar Kontaktfinger (1031) aufeinander zu drücken.

6. Erdungsschalter (100) nach Anspruch 5, wobei jedes der Vielzahl der elastischen Elemente (105) eine um den Begrenzungsstab (104) herum angeordnete Tellerfeder umfasst.

7. Erdungsschalter (100) nach Anspruch 2, ferner umfassend:
ein Kissen (106), das zwischen dem Paar von Kontaktfingern (1031) angeordnet ist.

8. Erdungsschalter (100) nach Anspruch 2, wobei jeder des Paars von Kontaktfingern (1031) an einem von der röhrenförmigen Klinge (102) entfernten Ende voneinander weg gebogen ist.

9. Erdungsschalter (100) nach Anspruch 1, ferner umfassend:
einen röhrenförmigen Leiter (107), der zwischen zwei der Vielzahl der beweglichen Kontakte (103) nebeneinander angeordnet ist, wobei jedes Ende des röhrenförmigen Leiters (107) in Kontakt mit einer abgeflachten Oberfläche am ersten Ende (1021) der jeweiligen röhrenförmigen Klinge (102) steht.

10. Schaltanlage mit dem Erdungsschalter nach einem der Ansprüche 1-9.

## Revendications

1. Interrupteur (100) de mise à la terre pour appareillage de commutation, comportant :
une pluralité de contacts fixes (101) disposés dans une pluralité de phases de l'appareillage de commutation ; et
une pluralité de contacts mobiles (103) manoeuvrables pour tourner par un mécanisme (110) de manoeuvre de l'appareillage de commutation de telle sorte que les contacts mobiles (103) puissent être couplés aux contacts fixes (101) respectifs ou découplés de ceux-ci,
**caractérisé en ce que** chacun des contacts mobiles (103) comporte une lame tubulaire (102) montée sur le mécanisme (110) de manoeuvre, une première extrémité (1021) de la lame tubulaire (102) étant aplatie.

2. Interrupteur (100) de mise à la terre selon la revendication 1, chacun des contacts mobiles (103) comportant en outre une paire de doigts (1031) de contact fixés sur un second côté (1022) de la lame tubulaire (102) opposé à la première extrémité (1021), et la paire de doigts (1031) de contact étant prévue pour être couplée au contact fixe (101) respectif par serrage du contact fixe (101).

3. Interrupteur (100) de mise à la terre selon la revendication 2, la paire de doigts (1031) de contact étant fixée à la lame tubulaire (102) par rivetage sous pression, et
la lame tubulaire (102) comportant une barre (1023) de pression insérée dans la lame tubulaire (102) par ajustement serré pour empêcher la seconde extrémité (1022) d'être déformée lorsque la paire de doigts (1031) de contact est rivetée sur la lame tubulaire (102).

4. Interrupteur (100) de mise à la terre selon la revendication 2, comportant en outre :
au moins une barre limitatrice (104) disposée perpendiculairement à la lame tubulaire (102) pour connecter et limiter la paire de doigts (1031) de contact.

5. Interrupteur (100) de mise à la terre selon la revendication 4, comportant en outre :
une pluralité d'éléments élastiques (105) disposés à des extrémités de la barre limitatrice (104) pour presser la paire de doigts (1031) de contact l'un vers l'autre.

6. Interrupteur (100) de mise à la terre selon la revendication 5, chacun de la pluralité d'éléments élastiques (105) comportant un ressort en rondelle(s) disposé autour de la barre limitatrice (104).

7. Interrupteur (100) de mise à la terre selon la revendication 2, comportant en outre :
un coussin (106) disposé entre la paire de doigts (1031) de contact.

8. Interrupteur (100) de mise à la terre selon la revendication 2, chacun de la paire de doigts (1031) de contact étant coudé pour s'écarter l'un de l'autre à une extrémité éloignée de la lame tubulaire (102).

9. Interrupteur (100) de mise à la terre selon la revendication 1, comportant en outre :
un conducteur tubulaire (107) disposé entre deux de la pluralité de contacts mobiles (103) adjacents l'un à l'autre, chaque extrémité du conducteur tubulaire (107) étant en contact avec une surface aplatie sur la première extrémité (1021) de la lame tubulaire (102) respective.

10. Appareillage de commutation comportant l'interrupteur de mise à la terre selon l'une quelconque des revendications 1 à 9.
